Europäisches Patentamt

(19) European Patent Office

Office européen des brevets

(11) Numéro de publication : **0 303 675 B1**

(12) **FASCICULE DE BREVET EUROPEEN**

(45) Date de publication du fascicule du brevet :
28.08.91 Bulletin 91/35

(51) Int. Cl.⁵ : **A21B 3/07**

(21) Numéro de dépôt : 88902488.1

(22) Date de dépôt : 29.02.88

(86) Numéro de dépôt international :
PCT/FR88/00112

(87) Numéro de publication internationale :
WO 88/06408 07.09.88 Gazette 88/20

(54) DISPOSITIF DE TRANSFERT DE PRODUITS A DUREE DE TRAITEMENT DIFFERENTE.

(30) Priorité : 02.03.87 FR 8702905

(43) Date de publication de la demande :
22.02.89 Bulletin 89/08

(45) Mention de la délivrance du brevet :
28.08.91 Bulletin 91/35

(84) Etats contractants désignés :
AT BE CH DE GB IT LI

(56) Documents cités :
EP-A- 0 015 848
FR-A- 2 447 884

(56) Documents cités :
FR-A- 2 492 224
FR-A- 2 579 072
GB-A- 1 455 639
GB-A- 2 167 031

(73) Titulaire : Grandi, René
Quartier Loudon -Ruy
F-38300 Bourgoin Jallieu (FR)

(72) Inventeur : Grandi, René
Quartier Loudon -Ruy
F-38300 Bourgoin Jallieu (FR)

(74) Mandataire : Roman, Michel
CABINET ROMAN 35, rue Paradis
F-13001 Marseille (FR)

## Description

Appareil de transfert de cuisson et de refroidissement, à sélection d'introduction et d'évacuation automatique des bacs contenant des aliments ou produits à durée de cuisson et de refroidissement variable.

Il est connu des procédés de tunnels de cuisson vapeur ou eau immergée en continu, et également des appareils où les bacs contenant les produits à cuire, sont déplacés par des chaînes ou par des galets par gravité, accomplissant un cycle de cuisson. Ces cuissons se suivent les unes derrière les autres, et chacune a son propre temps déterminé par le produit à cuire on ne peut donc mélanger les produits, chaque produit ayant sa durée déterminée de cuisson différente de l'un à l'autre.

L'exemple d'un braisé dont la cuisson est de trois heures, ne peut pas être introduit avec le "poulet" dont la cuisson est d'une demi-heure. C'est pour cela que ces dits appareils, sont obligés de cuire par "famille de cuisson".

Le dispositif qui va être décrit évite tous ces inconvénients.

Il est constitué d'une enceinte fermée, contenant une cuve, celle-ci pouvant être remplie à deux niveaux d'eau, selon la cuisson désirée : niveau bas pour la cuisson vapeur douce et niveau haut pour la cuisson immergée. Cette cuve est chauffée fluante, par le moyen désiré, fourreaux électriques rampes à gaz, ou également par une double enveloppe pleine d'huile chauffée par des fourreaux électriques immergés dans cette huile thermique.

Un convoyeur d'introduction et d'évacuation amène des paniers ou bacs munis d'une anse, et porteurs des produits à cuire, devant un portillon d'accès du dispositif, ce portillon vient coulisser, et à ce moment là, un bras porteur, muni d'un crochet vient saisir le panier pour l'introduire dans l'enceinte de cuisson. Chaque panier étant introduit l'un derrière l'autre, peut contenir des produits à durée de cuisson différente.

Cette cuisson ayant été programmée sur un pupitre, pour chaque produit du panier, une fois celle-ci terminée, le bras porteur muni du crochet vient saisir la anse du panier dans la cuve de cuisson et vient l'évacuer par le portillon et le posera sur le convoyeur d'évacuation. A l'intérieur de l'enceinte, un couvercle est actionné par un axe moteur, afin de le lever, pour permettre au panier de descendre ou de sortir de la cuve. Dans la partie supérieure de l'enceinte, une hotte permet d'évacuer les vapeurs.

Ce dispositif permet donc d'introduire des paniers, avec des produits dans un désordre de cuisson, ces produits cuisants à la vapeur douce ou fluante pouvant être différents et placés côte à côte, sans que les odeurs ne se mélangent, et en gardant respectivement leurs vitamines et sels minéraux.

le robot ou bras porteur, ayant introduit les paniers dans le désordre, viendra également les évacuer dans le désordre, selon les temps qui auront été établis par un automate programmable, qui aura mis en mémoire les temps de cuisson. Ainsi à titre d'exemple : La première introduction venant d'être positionnée peut contenir du "braisé" avec une durée de cuisson de trois heures.

— La deuxième introduction, pouvant être des haricots verts congelés, d'une durée de quarante minutes de cuisson.

— La troisième, pouvant être du poulet d'une durée de trente minutes de cuisson.

— La quatrième, pouvant être des choux-fleurs d'une durée de trente-cinq minutes de cuisson.

— La cinquième, pouvant être du poisson d'une durée de quinze minutes de cuisson.

— Et la sixième, pouvant être des pommes de terre d'une durée de vingt-cinq minutes de cuisson.

C'est ainsi que le panier introduit en cinquième position et dont le temps programmé de quinze minutes est le plus court, viendra être évacué le premier, puis la sixième introduction au temps de vingt-cinq minutes, sera évacué le deuxième, et ainsi de suite.

Une fois les produits cuits et évacués, on peut imaginer qu'un dispositif identique, mais équipé d'un système réfrigérant vient reprendre ces produits dans leur panier, et les introduire au milieu d'une enceinte réfrigérée, équipée d'une ventilation et compresseur de froid, des évaporateurs étant placés de manière à ne pas gêner le robot-bras porteur. Le temps du système de refroidissement étant programmé de façon identique à la cuisson, mais avec la durée de réfrigération appropriée au produit.

Les produits auront donc été cuits et refroidis, puis stockés après évacuation dans des chambres froides afin d'être différés en liaison froide.

On peut introduire dans ce dispositif tous types de produits à cuire ou à refroidir, notamment des aliments déjà conditionnés en emballage sous vide, en cuisson vapeur ou eau immergée, et ceci dans les temps de cuisson et de refroidissement adéquats et nécessaires à chaque produit.

La figure 1 représente en coupe, le dispositif vu de face, selon l'invention.

La figure 2 représente en coupe, le dispositif vu de côté et le fonctionnement de l'ensemble robot.

La figure 3 représente en coupe, le dispositif vu de côté en cours de chargement avec la cuve de cuisson.

La figure 4 représente en coupe, le dispositif de réfrigération avec compresseur de froid.

La figure 5 représente la perspective d'ensemble du dispositif.

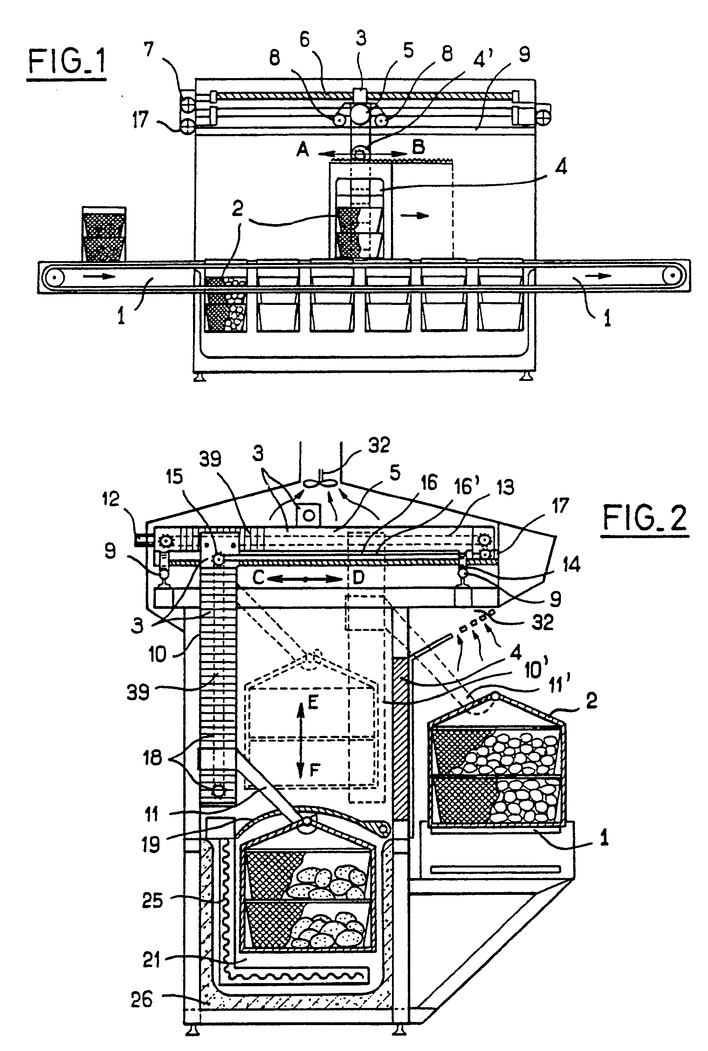

Le dispositif représenté figure 1, comporte l'appareil avec un convoyeur 1 d'introduction et d'évacuation, qui amène les bacs ou paniers 2, perforés ou pas et munis d'une anse devant le portillon 4 qui vient coulisser, actionné par un moteur 4' pour l'introduction des paniers. Cette introduction se fait au moyen d'un ensemble robot 3, formé d'un portique porteur 5, se déplaçant de A à B et vice versa, au moyen d'une tige filetée 6 actionnée par un moteur 7, ce portique 5 est supporté par des roulettes 8 qui coulissent sur des rails 9, et vient se positionner en face du portillon 4.

Cette figure 1 représente également les paniers 2, placés côte à côte, dans la cuve 21 de cuisson, après leur introduction.

La figure 2 représente le dispositif vu en coupe, et montre l'ensemble robot 3 allant chercher le panier à l'extérieur sur le convoyeur, pour l'amener dans la cuve : une fois que le portique 5 est venu se positionner devant le portillon d'accès 4, un bras 10 porteur d'un crochet 11 vient coulisser de C à D actionné par un moteur 12 au moyen d'une chaîne 13 retransmise par la tige cannelée 14. Sur ce bras porteur 10, le crochet 11 effectue un monte et baisse de E à F au moyen de deux tiges cannelées 16 et 16' avec un renvoi d'angle 15 et sont actionnées par un moteur 17 retransmettant à une chaîne et un pignon 18, faisant ainsi effectuer le mouvement de monte et baisse au crochet 11, afin que ce dernier puisse venir chercher le panier à l'extérieur du portillon 4.

Le bras porteur 10' et le crochet 11' sont représentés en pointillé devant le portillon d'accès 4.

Une fois que le crochet est venu saisir la anse du panier, le bras porteur 10 vient recoulisser de D à C, rentre le panier, à l'intérieur de l'enceinte, puis le monte et baisse, du crochet 11 descend le panier dans la cuve 21 de cuisson que vient fermer le couvercle 19.

Lorsque la cuisson individuelle de chaque panier sera terminée, l'ensemble robot effectuera les mouvements inverses, viendra chercher les paniers selon le temps qui aura été programmé pour chacun, et les posera sur le convoyeur qui les évacuera.

Cet ensemble robot est protégé par des caoutchoucs 39 à soufflets, permettant une protection des chaînes et des tiges cannelées, évitant les souillures. Ces soufflets étant facilement nettoyables après chaque opération.

Une hotte 32 permet d'évacuer les vapeurs, aussi bien à l'intérieur de l'enceinte qu'à l'extérieur devant le portillon d'accès 4, lorsque les paniers chauds auront été sortis de l'enceinte et posés sur le convoyeur.

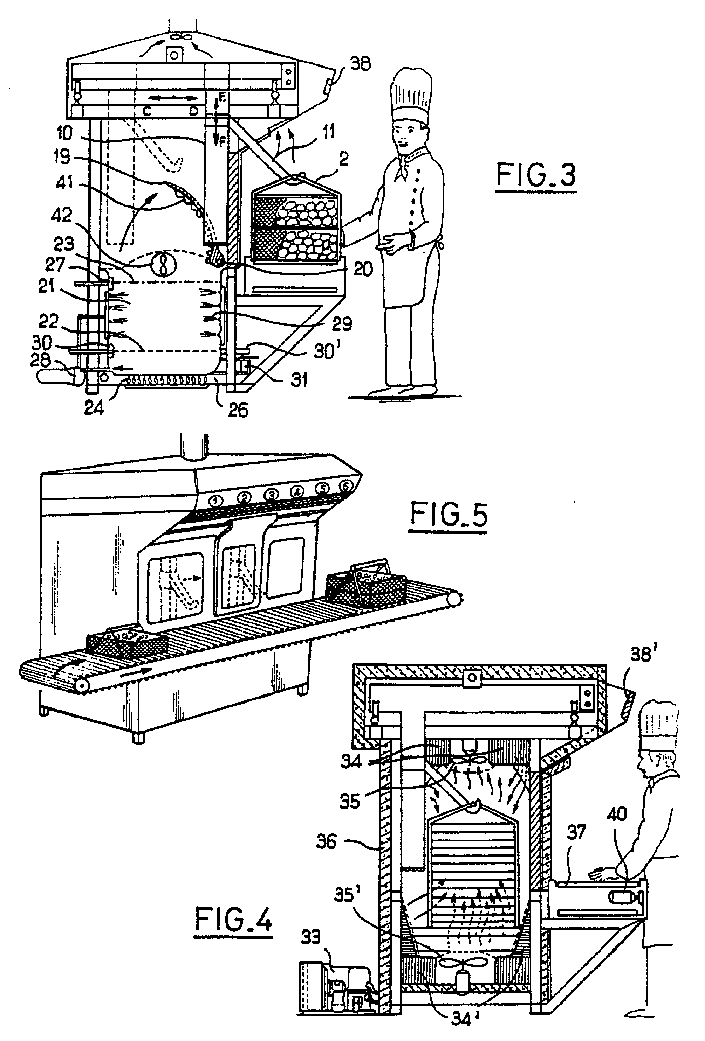

La figure 3 représente le dispositif en coupe, avec le bras porteur 10 et son crochet 11 venant chercher le panier 2 à l'extérieur de l'enceinte.

La cuve 21 recevant les paniers, peut être remplie à deux niveaux différents, un niveau bas 22 pour la cuisson à vapeur, et un niveau haut 23 pour la cuisson en eau immergée, telle que pour les pâtes ou autres. Mais on peut aussi remplacer l'eau par de l'huile pour un usage de friteuse. Un trop-plein 27 évite les débordements. Une pompe de recyclage 28 avec filtre permet d'éliminer les amidons, fécules et graisses laissés par les aliments, et par pression l'eau est restituée par des jets 29 permettant d'agiter les produits à cuire en eau immergée telles que les pâtes pour éviter qu'elles ne se collent entre elles.

En cuisson vapeur un trop-plein 30 avec récupérateur 30' de graisses garde un niveau constant de l'eau, et une vidange 31 permet l'évacuation totale de la cuve, notamment pour le nettoyage de celle-ci.

D'après la vapeur douce ou fluante, on peut aussi cuire en vapeur sèche ou surchauffée, au moyen de surchauffeurs à résistances électriques 41, pouvant être placés sous le couvercle 19, et ventilés par des ventiles 42 placées sur les parois latérales de l'enceinte. La température de la vapeur sèche montant à 250°, permet la destruction de certaines bactéries comme les salmonnelles.

Le chauffage de la cuve peut s'effectuer de plusieurs façons : par une rampe à gaz 24 située sous la cuve (fig 3) ou par des fourreaux électriques 25 mobiles pouvant être enlevés à chaque nettoyage (fig 2), ou bien par une double enveloppe 26 contenant de l'huile thermique chauffée par des fourreaux électriques (fig 2), cette double enveloppe entourant la cuve.

Le couvercle 19 représenté dans la figure 3 est actionné par un axe-moteur 20 qui fait lever le couvercle pour permettre l'introduction et l'évacuation du panier. Cet axe-moteur étant commandé et relayé simultanément par l'automate programmable dirigé sur le pupitre 38.

La fermeture et l'ouverture de chaque couvercle s'effectuant une fois que le crochet 11 est remonté sur le bras porteur 10 de E à F.

La figure 4 représente en coupe le même dispositif, mais en système de réfrigération, celle-ci se faisant par un compresseur de froid 33. L'enceinte réfrigérée étant équipée d'évaporateurs 34 et 34', de ventilations 35 et 35', et est entourée d'une forte isolation 36.

Le système d'ensemble robot sélectionnant l'introduction et l'évacuation des paniers est identique au dispositif cuiseur décrit précedemment. La hotte n'étant plus nécessaire pour le dispositif réfrigérant, cela permet d'y loger plus aisément les évaporateurs 34 et la ventilation 35.

Les paniers sont amenés et évacués toujours par un convoyeur 37 actionné par un moteur 40.

Le tout étant sélectionné et commandé électroniquement sur le pupitre 38'. La figure 5 représente une perspective d'ensemble du dispositif, toutefois les formes, les dispositions ainsi que les moyens de manutention à même résultat, peuvent varier dans la limite des équivalents, sans pour cela, changer l'esprit et la conception de l'invention qui vient d'être décrite.

## Revendications

1. Appareil de transfert pour cuisson et refroidissement à sélection d'introduction et d'évacuation automatique de paniers contenant des aliments ou produits à durées de cuisson ou de refroidissement variables,
comprenant un dispositif pour cuire ou réfrigérer des aliments dans une enceinte comportant un portillon coulissant (4) actionné par un moteur (4'), un convoyeur (1) extérieur à l'enceinte, apte à amener des paniers (2) contenant les aliments devant ledit portillon, un ensemble robot (3) situé dans l'enceinte et apte à saisir un panier (2) à l'extérieur sur le convoyeur (1), pour l'introduire et le poser dans la cuve de cuisson ou de réfrigération qui peut contenir plusieurs paniers (2), et un système électronique pouvant recevoir des informations sur la durée de cuisson ou de refroidissement et, selon ces informations, diriger le convoyeur (1), le moteur (4') et l'ensemble robot (3).

2. Dispositif selon la revendication 1 caractérisé en ce les produits contenus dans les paniers (2) peuvent nécessiter des durées de cuisson ou de réfrigération différentes, cette durée étant programmée sur un pupitre de commande (38 et 38'), l'ensemble robot (3), piloté par le système électronique étant conçu pour être capable, une fois écoulée la durée de cuisson ou de réfrigération des aliments contenus dans un panier (2), d'aller chercher celui-ci, quel que soit son emplacement dans l'enceinte, et de l'extraire de cette dernière pour le poser sur le convoyeur (1) qui l'évacuera vers le stockage.

3. Dispositif selon les revendications 1 et 2 caractérisé par un ensemble robot (3), formé d'un portique porteur (5) se déplaçant latéralement dans l'enceinte au moyen d'une tige filetée (6) et un moteur (7). Des roulettes (8) coulissent sur des rails (9) et supportent ce portique (5) qui vient se positionner en face du portillon (4) de l'enceinte. Sur ce portique (5) un bras porteur (10) muni d'un crochet (11) vient coulisser de C à D et inversement, au moyen d'une chaîne (13) retransmise par une tige cannelée (14) et actionnée par un moteur (12). Sur ce bras porteur (10), le crochet (11) effectue un monte et baisse de E à F au moyen de deux tiges cannelées (16) et (16') et un renvoi d'angle (15) actionné par un moteur (17) retransmettant à une chaîne et à un pignon (18), faisant ainsi effectuer le mouvement montant et descendant au crochet (11) pour qu'il vienne saisir le panier (2) sur le convoyeur (1) et le descendre dans la cuve. Cet ensemble robot (3) est protégé par des soufflets caoutchouc (39) pour éviter que les souillures pénètrent dans le mécanisme. Ces soufflets étant facilement nettoyables après chaque utilisation du dispositif.

4. Dispositif selon les revendications 1, 2 et 3 caractérisé en ce que la cuve de cuisson peut recevoir des équipements permettant de l'adapter à plusieurs types de cuisson, tels que trop-plein haut (27) maintenant le niveau (23) de l'huile ou de l'eau pour la cuisson des aliments par immersion, ou jets d'eau d'eau sous pression (29) internes à la cuve pour agiter les produits cuits par immersion dans l'eau (pâtes alimentaires par exemple) afin d'éviter qu'ils ne se collent entre eux, ou trop-plein bas (30) maintenant constant un niveau minimum (22) et récupérateur de graisse (30') pour la cuisson par vapeur fluente, ou encore surchauffeurs à résistances électriques (41) placés sous le couvercle (19) de la cuve, complétés par une ventilation forcée (42) placée sur les parois latérales de l'enceinte, pour la cuisson à vapeur sèche.

5. Dispositif selon la revendication 4 caractérisé en ce que plusieurs types de chauffage de la cuve peuvent être envisagés : par une rampe à gaz (24) placée sous la cuve, par des fourreaux électriques électriques mobiles (25) ou par une double enveloppe (26) remplie par de l'huile thermique chauffée par des fourreaux électriques.

6. Dispositif selon les revendications 1, 2 et 3, caractérisé en ce qu'il peut être totalement équipé d'un système complet de réfrigération ventilée, comportant un compresseur (33) des évaporateurs (34) et (34') de ventilations (35, 35') sans pour cela changer l'opération effectuée par l'ensemble robot (3).

7. Dispositif selon les revendications 1 à 5, caractérisé en ce que la cuve de cuisson comporte à l'emplacement de chaque panier un couvercle (19) actionné par un axe moteur (20) pour baisser ou lever ledit couvercle de façon synchronisée avec l'ensemble robot (3) pour l'entrée et la sortie des paniers (2).

8. Dispositif selon l'une quelconque des revendications précédentes, caractérisé en ce que toutes les actions, opérations, durées et temps de cuisson ou de refroidissement, sont synchronisés, relayés, sélectionnés et commandés électroniquement sur pupitre de commandes (38) et (38').

## Patentansprüche

1. Transfer-Gerät zum Kochen und Kühlen mit automatischer, selektiver Einführung und Entnahme von Nahrungsmittel oder sonstige Produkte enthaltenden Körben mit veränderlichen Koch- bzw. Kühlzeiten, im wesentlichen bestehend aus einer Vorrichtung zum Kochen bzw. Kühlen von Nahrungsmitteln in einer Kammer, versehen mit einer von einem Motor (4') bewegten Schiebetür (4), einem Förderer (1) außerhalb der Kammer, geeignet die die Nahrungsmittel enthaltenden Körbe (2) vor die vorgenannte Kammertür zu fördern, einer innerhalb der Kammer befindlichen Robotereinheit (3) und fähig einen Korb (2) außerhalb der Kammer auf dem Förderer (1) zu ergreifen, um ihn in die Kammer einzuführen und in dem Koch- bzw. Kühlkessel, der mehrere Körbe (2) aufnehmen kann, abzusetzen sowie einem Elektroniksystem, das Informationen über Koch- bzw. Kühlzeiten empfangen und entsprechend diesen Informationen den Förderer (1), den Motor (4') und die Robotereinheit (3) steuern kann.

2. Vorrichtung nach Anspruch 1, dadurch gekennzeichnet, daß die in den Körben (2) enthaltenen Produkte unterschiedliche Koch- bzw. Kühlzeiten erfordern können, diese Zeiten auf dem Bediengerät (38 und 38') programmiert werden und die von dem Elektroniksystem gesteuerte Robotereinheit (3) so ausgelegt ist, daß sie, nach Ablauf der Koch- bzw. Kühlzeit der in dem Korb (2) enthaltenen Nahrungsmittel, diesen Korb an einem beliebigen Ort in der Kammer ergreift und ihn daraus entnimmt, um ihn auf dem Förderer (1) abzustellen, welcher ihn zu einem Lager evakuiert.

3. Vorrichtung nach den Ansprüchen 1 und 2, gekennzeichnet durch eine Robotereinheit (3), gebildet aus einer sich in der Kammer mit Hilfe einer Schraubspindel (6) und einem Motor (7) seitlich bewegenden Träger-Laufbrücke (5). Die Laufrollen (8) gleiten auf den Schienen (9) und tragen die Laufbrücke (5), die sich gegenüber der Schiebetür (4) positioniert. Auf der Laufbrücke (5) gleitet ein mit einem Haken (11) versehener Trägerarm (10) in der Richtung C-D und umgekehrt, der von einem Motor (12) über eine Kette (13) und eine Nutstange (14) angetrieben wird An diesem Trägerarm (10) führt der Haken (11) senkrechte Bewegungen in den Richtungen E-F aus, mit Hilfe von zwei Nutstangen (16 und 16') und einem Umlenkglied (15), angetrieben von einem Motor (17) mit Übertragung an eine Kette und Zahnrad (18) zur Ausführung der senkrechten Bewegungen des Hakens (11), der somit den Korb (2) auf dem Förderer (1) ergreifen und ihn in den Kessel absenken kann. Diese Robotereinheit ist durch Gummimanschetten (39) geschützt, um das Eindringen von Schmutz in den Mechanismus zu verhindern. Die Manschetten können nach jeder Benutzung der Vorrichtung einfach gereinigt werden.

4. Vorrichtung nach den Ansprüchen 1, 2 und 3, dadurch gekennzeichnet, daß der Kochkessel Ausrüstungen aufnehmen kann, die seine Anpassung an mehrere Kocharten ermöglichen, wie oberer Überlauf (27) zur Haltung des Wasser- oder Ölstandes (23) beim Kochen im Tauchverfahren, oder Druckwasserdüsen (29) innerhalb des Kessels zum Rühren der im Tauchverfahren in Wasser gekochten Produkte (z.B. Teigwaren), um ein Zusammenkleben zu vermeiden, oder unterer Überlauf (30) zur Haltung eines Mindest-Flüssigkeitstandes (22) und Fett-Auffangvorrichtung (30') beim Kochen unter strömendem Dampf, oder noch unter dem Deckel (19) des Kessels angeordnete Zusatzerhitzer mit elektrischen Widerständen (41), vervollständigt durch eine an den Seitenwänden der Kammer angeordneten Fremdbelüftung (42) zum Kochen mit Trockendampf.

5. Vorrichtung nach Anspruch 4, dadurch gekennzeichnet, daß mehrere Beheizungen des Kessels vorgesehen werden können, wie eine unter dem Kessel angeordnete Gasbrennerröhre, bewegliche elektrische Heizstäbe (25) oder eine mit Thermalöl gefüllte und durch elektrische Heizstäbe beheizte doppelte Wandung (26).

6. Vorrichtung nach den Ansprüchen 1, 2 und 3, dadurch gekennzeichnet, daß sie völlig mit einem kompletten belüfteten Kühlsystem, bestehend aus einem Verdichter (33), Verdampfern (34) und (34'), Belüftungen (35, 35'), ausgerüstet werden kann, ohne den Betrieb der Robotereinheit (3) zu ändern.

7. Vorrichtung nach den Ansprüchen 1 bis 5, dadurch gekennzeichnet, daß der Kochkessel am Abstellort jedes Korbes mit einem Deckel (19) versehen ist, der mit Hilfe einer Antriebswelle (20) synchron mit der Bewegung der Robotereinheit (3) zum Einsetzen und zur Entnahme der Körbe (2) abgesenkt und gehoben werden kann.

8. Vorrichtung nach irgendeinem der vorgenannten Ansprüche, dadurch gekennzeichnet, daß alle Bewegungen, Arbeiten, Koch- bzw. Kühlzeiten auf dem Bediengerät (38) und (38') elektronisch übertragen, synchronisiert, gewählt und gesteuert werden.

## Claims

1. Transfer apparatus for baking and cooling with automatic introduction and withdrawal selection of baskets containing foodstuffs or products with variable baking or cooling times,
including a device for baking or cooling foodstuffs in a containment with sliding door (4) operated by a motor (4'), a conveyor (1) outside the containment capable of bringing the baskets (2) containing the foodstuffs up to the said door, a robot assembly (3) inside the containment capable of grasping a basket (2) outside on the conveyor (1), for introduction and placing it in the baking or cooling containment which can hold several baskets (2), and an electronic system for receiving data concerning baking or cooling duration and, according to this data, operating the conveyor (1), the motor (4') and the robot assembly (3).

2. Device as per claim 1 characterised by the products contained in the basket (2) requiring different baking and cooling times, this time being programmed on a control panel (38 and 38'), with the robot assembly (3), controlled by the electronic system, being designed to be able to, once the baking or cooling time for the foodstuffs contained in the basket (2) is terminated, of fetching them, whatever their position in the containment, and of extracting them and laying them on the conveyor (1) for transport to the place of storage.

3. Device as per claims 1 and 2 characterised by a robot assembly (3) formed of a gantry (5) moving laterally inside the containment through a threaded rod (6) and motor (7). The rollers (8) run on the rails (9) and carry this gantry (5) which is positioned opposite the gate (4) of the containment. A bearing arm (10) on this gantry (5) fitted with a hook (11) slides from C to D and returns, through a chain (13) driven by a splined rod (14) and operated by a motor (12). On this bearing arm (10), the hook (11) rises and falls from E to F through two splined rods (16) and (16') and an angle gearing (15) with drive to a motor (17) transmitted to a chain and to a pinion (18) thereby inducing an upward and downward movement of the hook (11) so that it picks up the basket (2) on the conveyor (1) and lowers it into the containment. This robot assembly (3) is protected by rubber bellows (39) to avoid any dirt penetrating the mechanism. These bellows are easily cleaned after each utilisation of the system.

4. Device as per claims 1, 2 and 3 characterised by the baking containment receiving the equipment adapted to several types of baking, such as the high high level (27) maintaining the level (23) of oil or water for baking foodstuff by immersion, or pressurized water (29) sprayed inside the containment to stir the products cooked by immersion (for instance pastas) in order to prevent them sticking, or the low-low level (30) maintaining a constant minimum level (22) and grease collector (30') for baking by flowing steam, or superheater with electrical resistances (41) placed under the cover (19) of the containment, completed by forced ventilation (42) placed on the sidewall of the containement for dry steam baking.

5. Device as per claim 4 characterised by a potential for several types of containment heating : gas burner line (24) under the containment, mobile electrical heating sleeves (25) or double skin (26) filled with oil heated by the electrical heating sleeves.

6. Device as per claims 1, 2 and 3 characterised by a full system of ventilated cooling, including a compressor (33), evaporators (34) and (34'), fans (35, 35') without changing the operation performed by the robot assembly (3).

7. Device as per claims 1 to 5 characterised by the containment having a lid (19) at the position of each basket operated by a motor-driven shaft (20) to low or raise the said lid in synchronisation with the robot assembly (3) for the movement of baskets (2).

8. Device as per any one of the aforesaid claims, characterised in that all the actions, operations, durations and baking or cooling times, are synchronised, relayed, selected and controlled electronically on the control panel (38) and (38').

FIG. 1

FIG. 2

FIG.3

FIG.5

FIG.4